# EUROPEAN PATENT SPECIFICATION

(11) **EP 1 207 072 B1**
(45) Date of publication and mention of the grant of the patent: **06.10.2004**
(21) Application number: 01309296.0
(22) Date of filing: 01.11.2001
(51) Int. Cl.: B60K 37/04

(54) **Vehicle data display device and method for data display**
Vorrichtung und Verfahren zur Anzeige von Informationen in einem Fahrzeug
Dispositif et procédé d'affichage d'information dans un véhicule

(30) Priority: 20.11.2000 US 716718
(43) Date of publication of application: 22.05.2002
(73) Proprietor: ArvinMeritor Technology, LLC, Troy, Michigan 48084 (US)
(72) Inventor: Chene, George, Sterling Heights, Michigan 48314 (US); Shintaku, Wayne, Auburn Hills, Michigan 48326 (US); Worrall, Jack R., Novi, Michigan 48375 (US); French, Lee A., Sterling Heights, Michigan 48310 (US); Ramsey, Reno V., Lake Orion, Michigan 48359 (US); Mueller, Brian Jeffrey, Sarasota, Florida 34240 (US); Kramer, Dennis A., Troy, Michigan 48098 (US)
(74) Representative: Jones, John Bryn

(56) References cited:
- DE-A- 4 015 329
- DE-A- 4 409 777
- US-A- 5 523 811
- US-A- 5 617 112

## Description

### BACKGROUND OF THE INVENTION

This invention relates to a vehicle data display device, more particularly, the invention relates to a method and apparatus for improving the readability of the characters on the screen of the display device during operation.

Display devices such as speedometers and clock radios are commonly used in vehicles to convey vehicle information to the occupant. The display devices are typically analog or digital and are integrated into the vehicle during initial vehicle design. As a result, during changing vehicle environment conditions such as vibration of the vehicle due to bumpy roads, low or bright light, and/or rapid movement of the vehicles, the vehicle occupant is able to read the display device. In the case of personal computers, which are often used in vehicles, the display device is not integrated into the vehicle and therefore the characters on the screen of the display device are difficult to read. In particular, handheld personal digital assistants (PDA) are becoming more widely used. Because of the portability of PDAs, such as Palm Pilot® and Hand Spring® devices, it is desirable to utilize PDAs in vehicles such as commercial trucks to display additional vehicle data and provide flexibility and customization of information for commercial trucks. Since PDAs are not designed for such applications, the characters displayed on the screen are often not readable to the occupant due to changing vehicle environment conditions. Any adjustments that the occupant is able to make to the PDA manually detracts the occupant's attention from operation of the vehicle. Therefore, what is needed is a PDA for use in vehicles such as commercial trucks which improves the readability of the characters displayed on the screen to permit the occupant to focus his attention on operation of the vehicle.

US5523811 (Wada et al) showing the features of the preamble of the independent claims discloses a rear view camera apparatus for a vehicle having an image stabilising system comprising a vibration detection sensor whose signals are used to drive a half mirror and glass plate in front of the camera to compensate for the vibrations and provide a stable image on a display connected to the camera.

DE4015329 discloses a device that alters the brightness of a vehicular display in response to signals from a light sensor.

### SUMMARY OF THE INVENTION AND ADVANTAGES

The present invention provides a vehicle data display device and a method according to the independent claims. The device comprises a screen with characters displayed thereon having display attributes, a vehicle speed environment sensor detecting a vehicle speed of the vehicle environment condition and producing a signal in response thereto, and a control device adjusting said display attributes of said characters on said screen in response to said signal to improve the readability of said characters. The display attribute is font size and/or line spacing and the attribute is increased in response to an increase in vehicle speed.

Accordingly, the above invention provides a vehicle data display device that improves the readability of characters on a screen.

### BRIEF DESCRIPTION OF THE DRAWINGS

Other advantages of the present invention can be understood by reference to the following detailed description when considered in connection with the accompanying drawings wherein:
Figure 1 is a schematic view of the present invention utilizing a PDA;
Figure 2 is character display attributes when the vehicle is moving at a low speed; and
Figure 3 is the display attributes of the characters when the vehicle is moving at a higher speed.

### DETAILED DESCRIPTION OF THE PREFERRED EMBODIMENT

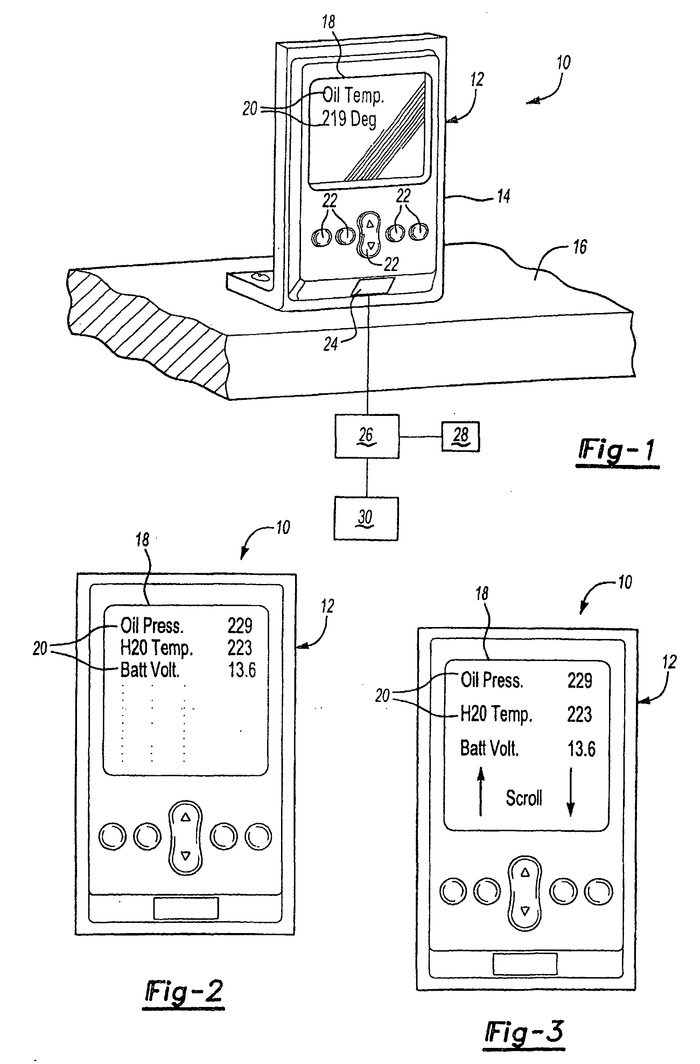

A vehicle data display device 10 is schematically shown in Figure 1. The vehicle data display device 10 includes a personal computer 12 such as a PDA. The PDA may be a Palm Pilot® or Hand Spring® device or any other suitable computer and display device. The PDA 12 may be received by a mounting member 14, which is preferably a cradle. The cradle 14 has a databus (not shown) which receives the device databus 24. The PDA 12 has a screen 18 for displaying characters 20. The screen 18 may be a touch screen for receiving inputs from a stylus. Input keys 22 may also be used to enter data into the PDA 12. The mounting member 14 may be secured to a portion of the vehicle 16 such as a dashboard.

The device databus 24 is connected to a control device 26, which may be hardware or software. The control device 26 may be incorporated into the PDA 12 or the cradle 14. Alternatively, the control device may be located on a portion of the vehicle or integrated into the vehicle controller 30. A vehicle environment sensor 28 is electrically connected to the control device 26 for sensing a vehicle environment condition. Vehicle environment sensor, may alternatively be connected to the vehicle controller 30.

Since the PDA 12 is separately mounted to the vehicle and not designed to be integrated into the vehicle, the PDA 12 and its screen 18 are subject to vibrations during vehicle operation. The more severe the vibrations become the more difficult it is to read the characters 20 displayed on the screen 18. This may distract the vehicle occupant from operating the vehicle.

In one embodiment of the present invention, the characters 20 may have a particular font size and line spacing as shown in Figures 2 and 3. When the vehicle is at rest or traveling at low speeds, the font size and line spacing at which the characters 20 are typically displayed on the screen 18 are acceptable. However, when the vehicle is traveling at greater speeds it is more difficult for the occupant to read the characters 20 at the font size and line spacing typically used. Accordingly, the vehicle environment sensor 28 may include a speedometer signal which provides the vehicle speed. The vehicle speed may be provided by a separate sensor or a signal from the vehicle controller 30. The font size and line spacing of the characters 20 may be increased, as shown in Figure 3, to improve the readability of the characters 20 to the vehicle occupant. In this manner, the vehicle occupant need not attempt to adjust the characters 20 to improve readability during vehicle operation. Since less data may be displayed on the screen 18, the screen 18 may include scrolling indicia that may be easily manipulated by the vehicle occupant by manipulating the touch screen or input keys 22.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A vehicle data display device (10) comprising:
a screen (18) with characters (20) displayed thereon having display attributes;
a vehicle environment sensor (28) detecting a vehicle environment condition and producing a signal in response thereto; and
a control device (26) adjusting said display attributes of said characters on said screen in response to said signal to improve the readability of said characters, **characterised in that** the vehicle environment sensor is a vehicle speed sensor for detecting a vehicle speed of the vehicle, wherein said display attribute is font size and/or line spacing and said attribute is increased in response to an increase in vehicle speed.

2. The vehicle data display device according to any preceding claim, wherein said control device is hardware.

3. The vehicle data display device according to claim 1 or claim 2, wherein said control device is software.

4. A method of improving the readability of characters on a vehicle data display device (10), the method comprising the steps of:
a) displaying characters (20) on a screen (18);
b) sensing a vehicle environment condition;
c) producing a signal in response to the sensed vehicle environment condition; and
d) adjusting a display attribute of the characters on the screen in response to the signal;
**characterised in that** the vehicle environment condition is a vehicle speed of the vehicle having the screen and the display attribute is adjusted in response to a signal for a change in the vehicle speed, wherein said display attribute is font size and/or line spacing and said attribute is increased in response to an increase in vehicle speed.

## Patentansprüche

1. Fahrzeugdatenanzeigevorrichtung (10), umfassend:
einen Bildschirm (18) mit darauf angezeigten Zeichen (20), die Anzeigeattribute besitzen;
einen Fahrzeugumgebungssensor (28), der einen Fahrzeugumgebungszustand erfasst und daraufhin ein Signal erzeugt; und
eine Steuervorrichtung (26), welche die Anzeigeattribute der Zeichen auf dem Bildschirm als Antwort auf das Signal einstellt, um die Lesbarkeit der Zeichen zu verbessern, **dadurch gekennzeichnet, dass** der Fahrzeugumgebungssensor ein Fahrzeuggeschwindigkeitssensor zur Erfassung einer Fahrzeuggeschwindigkeit des Fahrzeuges ist, wobei das Anzeigeattribut die Schriftgröße und/oder der Zeilenabstand und das Attribut als Antwort auf eine Erhöhung der Fahrzeuggeschwindigkeit vergrößert ist.

2. Fahrzeugdatenanzeigevorrichtung nach einem der vorhergehenden Ansprüche, bei der die Steuervorrichtung Hardware ist.

3. Fahrzeugdatenanzeigevorrichtung nach Anspruch 1 oder 2, bei der die Steuervorrichtung Software ist.

4. Verfahren zur Verbesserung der Lesbarkeit von Zeichen auf einer Fahrzeugdatenanzeigevorrichtung (10), wobei das Verfahren folgende Schritte umfasst:
a) Anzeigen von Zeichen (20) auf einem Bildschirm (18);
b) Erfassen eines Fahrzeugumgebungszustands;
c) Erzeugen eines Signals als Antwort auf den erfassten Fahrzeugumgebungszustand; und
d) Einstellen eines Anzeigeattributs der Zeichen auf dem Bildschirm als Antwort auf das Signal;
**dadurch gekennzeichnet, dass** der Fahrzeugumgebungszustand eine Fahrzeuggeschwindigkeit des Fahrzeuges mit dem Bildschirm ist und das Anzeigeattribut als Antwort auf ein Signal für eine Änderung der Fahrzeuggeschwindigkeit eingestellt wird, wobei das Anzeigeattribut die Schriftgröße und/oder der Zeilenabstand ist und das Attribut als Antwort auf eine Erhöhung der Fahrzeuggeschwindigkeit vergrößert wird.

## Revendications

1. Dispositif d'affichage de données dans un véhicule (10) comprenant :
un écran (18) muni de caractères (20) affichés dessus possédant des caractéristiques d'affichage ;
un capteur d'environnement du véhicule (28) détectant une condition d'environnement du véhicule et produisant un signal en réponse à celle-ci ; et
un dispositif de commande (26) ajustant lesdites caractéristiques d'affichage desdits caractères sur ledit écran en réponse audit signal afin d'améliorer la lisibilité desdits caractères, **caractérisé en ce que** le capteur d'environnement du véhicule est un capteur de vitesse du véhicule pour détecter une vitesse du véhicule, dans lequel ladite caractéristique d'affichage est la taille de la police et/ou l'interligne et ladite caractéristique est augmentée en réponse à une augmentation de la vitesse du véhicule.

2. Dispositif d'affichage de données dans un véhicule selon l'une quelconque des revendications précédentes, dans lequel ledit dispositif de commande est un matériel électronique.

3. Dispositif d'affichage de données dans un véhicule selon la revendication 1 ou la revendication 2, dans lequel ledit dispositif de commande est un logiciel.

4. Procédé d'amélioration de la lisibilité de caractères sur un dispositif d'affichage de données dans un véhicule (10), le procédé comprenant les étapes consistant à :
a) afficher des caractères (20) sur un écran (18) ;
b) capter une condition d'environnement du véhicule;
c) produire un signal en réponse à la condition d'environnement du véhicule captée ; et
d) ajuster une caractéristique d'affichage des caractères sur l'écran en réponse au signal ;
**caractérisé en ce que** la condition d'environnement du véhicule est une vitesse du véhicule comportant l'écran, et **en ce que** la caractéristique d'affichage est ajustée en réponse à un signal de changement de la vitesse du véhicule, dans lequel ladite caractéristique d'affichage est la taille de la police et/ou l'interligne et ladite caractéristique est augmentée en réponse à une augmentation de la vitesse du véhicule.
